**Europäisches Patentamt**

**European Patent Office**

**Office européen des brevets**

(19)

(11) Veröffentlichungsnummer: **0 133 426**
**B1**

(12) # EUROPÄISCHE PATENTSCHRIFT

(45) Veröffentlichungstag der Patentschrift:
**01.03.89**

(51) Int. Cl.⁴: **G 01 P 11/00**

(21) Anmeldenummer: **84890138.5**

(22) Anmeldetag: **20.07.84**

(54) Verfahren zum raschen Nachführen eines Mittelwertes, vorzugsweise des arithmetischen Mittelwertes eines fast periodischen Signals.

(30) Priorität: **20.07.83 AT 2658/83**

(43) Veröffentlichungstag der Anmeldung:
**20.02.85 Patentblatt 85/8**

(45) Bekanntmachung des Hinweises auf die Patenterteilung:
**01.03.89 Patentblatt 89/9**

(84) Benannte Vertragsstaaten:
**AT DE FR GB**

(56) Entgegenhaltungen:
**EP-A- 0 054 112**
**EP-A- 0 067 804**
**DE-A- 2 912 773**

**RESEARCH DISCLOSURE, Nr. 160, August 1977, Seite 62, Industrial Opportunities Ltd., Hampshire, GB; "Engine cylinder combustion performance sensor"**

(73) Patentinhaber: **VOEST-ALPINE AUTOMOTIVE Gesellschaft m.b.H., Derfflingerstrasse 15, A-4017 Linz (AT)**

(72) Erfinder: **Brasseur, Georg, Dipl.-Ing., Eisslergasse 20, A-1130 Wien (AT)**
Erfinder: **Kasper, Ferdinand, Dipl.-Ing., Ottakringerstrasse 46, A-1170 Wien (AT)**

(74) Vertreter: **Gibler, Ferdinand, Dipl.Ing.Dr.tech., Dorotheergasse 7/14, A-1010 Wien (AT)**

## Beschreibung

Die Erfindung betrifft ein Verfahren zum raschen Nachführen eines Mittelwertes, vorzugsweise des arithmetischen Mittelwertes, eines fast periodischen Signals, wie z.B. eines der momentanen Drehzahl einer Brennkraftmaschine proportionalen Signals, bei auftretenden Änderungen desselben sowie eine Schaltungsanordnung zur Durchführung dieses Verfahrens.

Unter einem fast periodischen Signal ist vorliegendenfalls ein Signal zu verstehen, das Schwankungen von Periode zu Periode unterworfen ist, wobei sich analog zu einem periodischen Signal eine Periodendauer bestimmen läßt. Jedoch können sich bei einem fast periodischen Signal im Gegensatz zum periodischen Signal die Bestimmungsgrößen wie Signalamplitude, Periodendauer, Mittelwert etc. von einer Periode zur nächsten ändern, insbesondere geringfügig ändern.

Solche Signale treten z.B. auf, wenn für die Bestimmung der Drehzahl einer Verbrennungskraftmaschine die Winkelgeschwindigkeit der Kurbelwelle oder eines anderen dazu synchron laufenden Maschinenteils herangezogen wird. Wegen der durch die Verbrennungsvorgänge in den Zylindern hervorgerufenen Ungleichförmigkeit der Drehbewegung dieser Teile ist es i.a. nicht ausreichend, eine momentane Drehzahl der Maschine zu bestimmen, sondern es muß mindestens über die Periodendauer des Momentandrehzahl-Signales gemittelt werden, wobei die Periodendauer definiert ist durch die Anzahl der Zylinder, das Arbeitsprinzip der Verbrennungskraftmaschine (zweitakt, viertakt) und die Umdrehungszahl der Maschine pro Zeiteinheit. Diese Signaländerungen von einer Periode zur nächsten können bei stationärem Betrieb einer Verbrennungskraftmaschine etwa 10% betragen, sie können jedoch in instationären Betriebsfällen, wie z.B. einer plötzlichen Laständerung am Motor, bei Einspritzmengenänderungen od.dgl., bis zu 40–50% erreichen.

Die Mittelung erstreckt sich dabei über meist eine oder mehrere volle Umdrehungen. Dies hat den Nachteil, daß speziell im Niedrigdrehzahlbereich (Leerlauf), die Drehzahlbestimmung eine relativ lange Zeitspanne benötigt; für die Regelung der Maschine bringt dies erhebliche Nachteile mit sich.

Eine Verbesserung des dynamischen Verhaltens der Drehzahlmessung kann erreicht werden, wenn das Mittelungsintervall mit den Verbrennungsvorgängen in den Zylindern und damit mit der Stellung der Kurbelwelle synchronisiert wird. Damit kann die Mittelungszeit auf die für dieses Verfahren minimale Spanne verkürzt werden.

Entsprechend dem Stand der Technik (EP-A-67 804) werden für die Mittelwertbildung analog oder digital arbeitende Mittelwertbildner herangezogen, die meist den arithmetischen Mittelwert des Meßsignales bilden:

$$\text{arithmetischer Mittelwert} = \frac{1}{T} \int_{t-T}^{t} f(\tau), \, d\tau$$

dabei ist $f(\tau)$ das Drehzahlmeßsignal und T die Integrationszeit.

Für periodische oder zumindest fast periodische Signale, wie sie die Drehzahl-Meßsignale für Verbrennungskraftmaschinen darstellen, muß dabei die Integrationszeit zur Gewinnung eines aussagekräftigen Mittelwertes ein ganzzahliges Vielfaches der Periodendauer des Meßsignales betragen. Daher ist es notwendig, die Integrationszeit selbst der Periodendauer des Meßsignales anzupassen; dies ist mit großem schaltungstechnischen Aufwand verbunden. Außerdem werden durch diese Art der Mittelwertbildung alle Signalanteile vom jeweils betrachteten Zeitpunkt bis zu einem um die Zeitspanne T zurückliegenden Zeitpunkt gleich bewertet. Sprunghafte Änderungen des Drehzahlsignales wirken sich nur langsam aus, einzelne kurzzeitige Änderungen werden sogar sehr stark unterdrückt. Dies hat für die Regelung der Maschine eine schlechte Regeldynamik zur Folge.

Aufgabe der Erfindung ist es, eine wesentliche Verbesserung der Dynamik der Mittelwertbildung zu erreichen. Dies wird bei einem Verfahren der eingangs genannten Art erfindungsgemäß dadurch erreicht, daß der während einer vorgegebenen Anzahl von Perioden auftretende Verlauf eines fast periodischen Signals als Signalbild gespeichert wird, während einer darauffolgenden vorgegebenen Anzahl von Perioden dieses gespeicherte Signalbild entsprechend dem Verlauf des fast periodischen Signals während dieser vorgegebenen Anzahl von Perioden nachgeführt wird, und daß sodann fortlaufend während einer vorgegebenen Anzahl von Perioden jeweils das zuletzt nachgeführte gespeicherte Signalbild gemäß dem aktuellen Verlauf des fast periodischen Signals während der vorgegebenen Anzahl von Perioden nachgeführt wird, und daß gleichzeitig mit der Aktualisierung der aktuelle Verlauf des fast periodischen Signals phasenrichtig mit dem gespeicherten Signalbild unter Erzeugung eines Abweichsignals verglichen und dieses Abweichsignal mit einem Mittelwert des fast periodischen Signals, bzw. eines diesem entsprechenden Signals, verknüpft und insbesondere linear, kombiniert wird.

Durch diese Maßnahme ist es möglich, für die Ermittlung des Mittelwertes im Signalbild immer ein aktualisiertes Abbild einer oder mehrerer Perioden des Eingangssignales verfügbar zu haben. Dieses Signalbild stellt das während der jeweiligen Periode(n) erwartete Eingangssignal dar. Durch den Vergleich des aktuellen Eingangssignales mit dem Signalbild ist es möglich, Abweichungen des Eingangssignales vom Signalbild sehr rasch, d.h. in einer Zeitspanne, die kürzer ist als die sonst für die Bildung des Mittelwertes notwendige Mittelungszeit, zu erkennen. Damit kann z.B. die Dynamik der Regelung einer Verbrennungskraftmaschine wesentlich verbessert werden.

Die erfindungsgemäße Schaltungsanordnung zur Durchführung des Verfahrens kennzeichnet sich durch eine Bild-Speicher- und Nachführschaltung, bei welcher an einem Eingang das fast periodische Signal und an einem Ausgang das mit dem Eingangssignal synchrone, gespeicherte Signalbild anliegt, sowie durch eine Schaltung zur Bildung eines Mittelwertes des fast periodischen Signals, eine erste und eine zweite Signalverknüpfungsschaltung, wobei der Ausgang der Bild-Speicher-Nachführschaltung an einen Eingang der ersten Verknüpfungsschaltung geführt ist, bei welcher an einem weiteren Eingang das fast periodische Signal anliegt, und deren Ausgang gegebenenfalls über ein Koeffizientenglied an einen Eingang der zweiten Verknüpfungsschaltung geführt ist, bei welcher ein weiterer Eingang an den Ausgang des Mittelwertbildners geführt ist und an deren Ausgang der den Änderungen des fast periodischen Signals rasch nachgeführte Mittelwert des fast periodischen Signals anliegt.

Hierdurch ist es in besonders einfacher Weise möglich, z.B. die Summe aus Mittelwert und Momentanabweichung zu bilden und dadurch einen raschen nachgeführten Mittelwert zu erzeugen. In diesem rasch nachgeführten Mittelwert wirken sich im besonderen die dynamischen Abweichungen des fast periodischen Eingangssignales vom Signalbild aus. Dadurch kann z.B. die Drehzahlabweichung eines über einen elektronischen Regler betriebenen Dieselmotors von der Solldrehzahl rasch erkannt und ausgeregelt werden.

Nachstehend ist die Erfindung unter Bezugnahme auf die Zeichnungen beispielsweise erläutert. Es zeigt:

Fig. 1a bis 1c Blockschaltbilder möglicher Ausführungsformen erfindungsgemäßer Schaltungsanordnungen,

Fig. 2 in Blockform eine erfindungsgemäße Form einer Synchronisierschaltung für die Schaltungsanordnung gemäß Fig. 1,

Fig. 3a eine Bild-Speicher und -Nachführschaltung sowie einen Mittelwertbildner für diese Schaltungsanordnung gemäß Fig. 1,

Fig. 3b bis 3c weitere mögliche Bild-Speicher und -Nachführschaltungen.

Fig. 4 eine Anwendungsschaltung für die Drehzahlregelung von Verbrennungskraftmaschinen,

Fig. 5 im Detail die Sensorschaltung der Anordnung gemäß Fig. 4 zur Gewinnung des Eingangssignales und des Synchronsignales als Eingangsgrößen für eine erfindungsgemäße Schaltungsanordnung und

Fig. 6 ein Signaldiagramm mit Signalverläufen an Schaltungspunkten der erfindungsgemäßen Schaltungsanordnung nach Fig. 1.

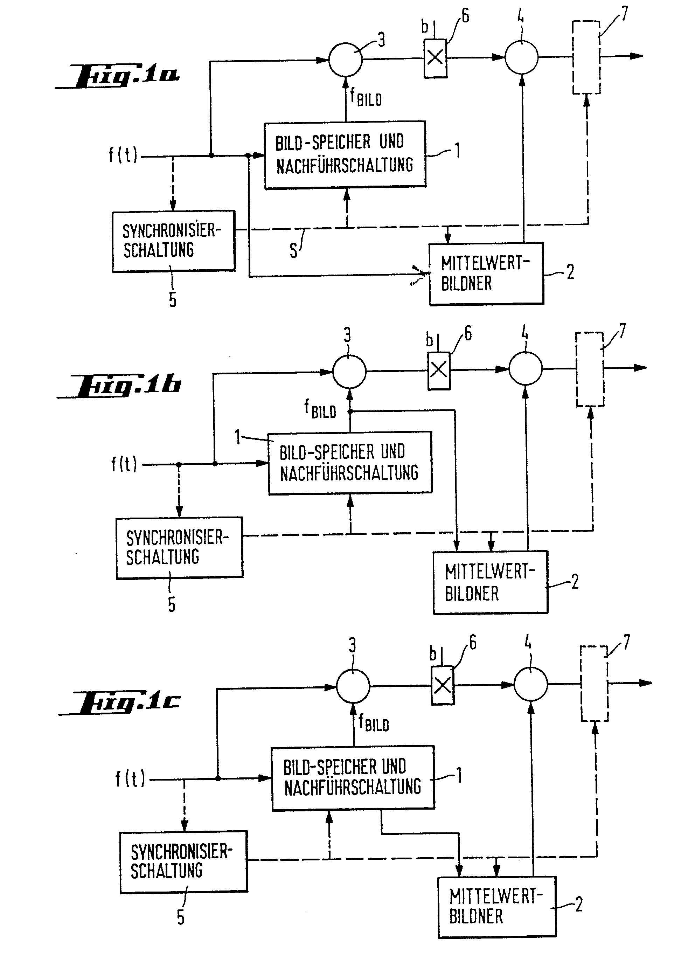

Die Fig. 1a bis 1c zeigen Blockschaltbilder einer Realisierung des erfindungsgemäßen «beobachtenden» Mittelwertbildners. Die Schaltung umfaßt eine Schild-Speicher und -Nachführschaltung 1, einen Mittelwertbildner 2, eine erste Verknüpfungsschaltung 3, eine zweite Verknüpfungsschaltung 4 und gegebenenfalls eine Synchronisierschaltung 5, dem Ausgang der Verknüpfungsschaltung 4 kann eine Abtast- und Halteschaltung 6 nachgeschaltet sein, um bei zeitdiskreten Signalen f(t) ein kontinuierliches Ausgangssignal zu erhalten.

Die Ausführungsformen des «beobachtenden» Mittelwertbildners nach Fig. 1a bis 1c unterscheiden sich voneinander nur durch die Ableitung des Eingangssignales für den Mittelwertbildner 2. In Fig. 1a wird der Mittelwert direkt aus dem Eingangssignal, dem fast periodischen Signal f(t) gebildet, in Fig. 1b vom Ausgangssignal der Bild-Speicher- und -Nachführschaltung 1, welches das Signalbild darstellt. In der Schaltung entsprechend Fig. 1c werden für die Bildung des Mittelwertes intern in der Bild-Speicher- und -Nachführschaltung 1 vorhandene Signale verwendet. Die Ableitung dieser Signale ist in Fig. 3a angedeutet.

Das Eingangssignal f(t) stellt das Signal dar, von dem der «beobachtete» Mittelwert gebildet werden soll. Es handelt sich hiebei, je nach dem Anwendungsfall, um eine Spannung, eine Frequenz, eine Perioden- oder Pulsdauer, abhängig von der das Eingangssignal f(t) liefernden – nicht dargestellten – Signalaufnahmeschaltung. Nach der Beschaffenheit dieses Signals richtet sich die Schaltungstechnische Realisierung der einzelnen Funktionsblöcke (analoge oder digitale Signalverarbeitungsschaltungen).

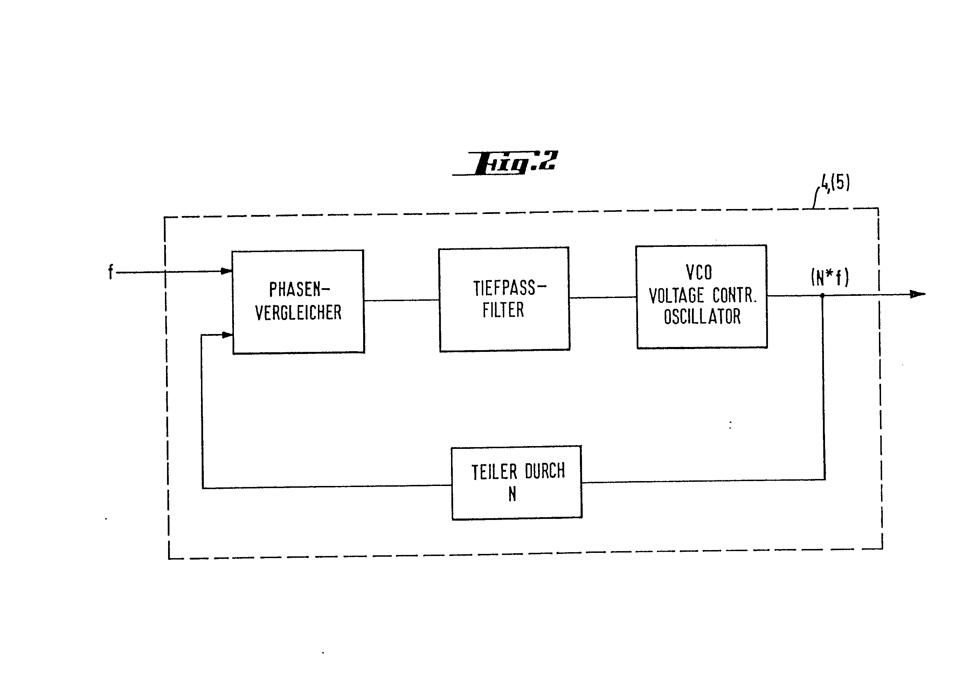

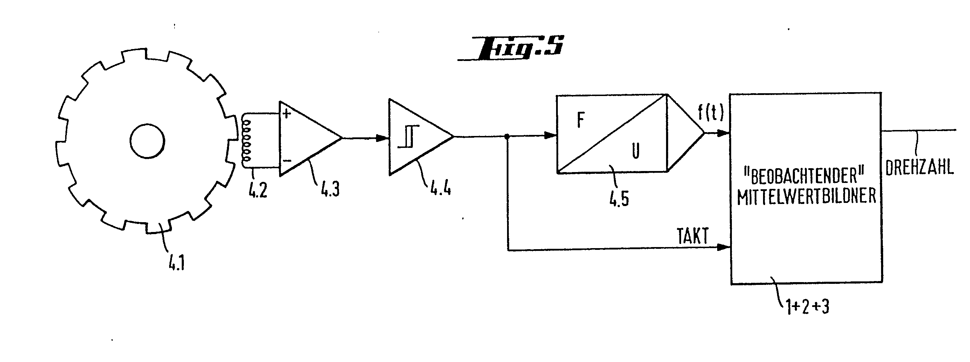

Das Synchronsignal S ist ein Taktsignal, bei dem eine feste vorgegebene Taktimpulsanzahl der Periode des jeweiligen Eingangssignales entspricht. Dieses Signal kann in den meisten Fällen auf einfache Weise in der Signalaufnahmeschaltung für das Eingangssignal f(t) erzeugt werden (siehe Fig. 5 für die Drehzahlaufnahme). Steht dieses Signal nicht zur Verfügung, so kann es in vielen Fällen mit einer Synchronsignal-Ableitschaltung nach Fig. 2 aus dem Eingangssignal f(t) gewonnen werden. Die Fig. 2 stellt eine PLL-Schaltung in bekannter Technik dar, bei der aus einem Eingangssignal f(t) ein synchrones Taktsignal mit der N-fachen Frequenz des Wechselanteiles von f(t) erzeugt wird. Die Schwierigkeit in der Realisierung dieser Schaltung liegt in der Dimensionierung des Tiefpaßfilters, wenn die Periodendauer des Eingangssignales f(t) einen großen Bereich umfaßt.

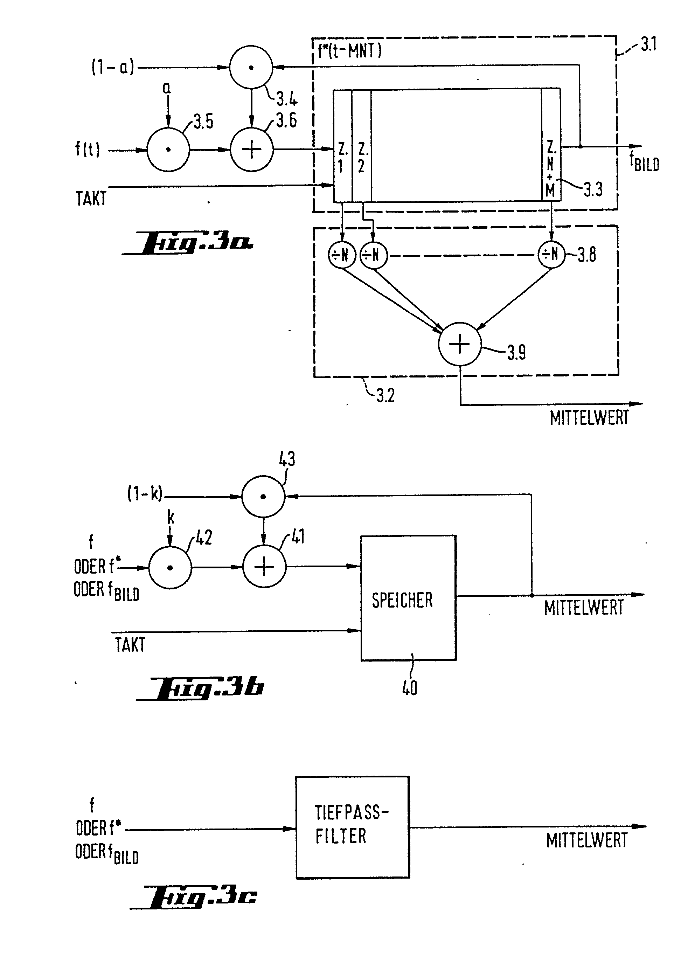

Das «Bildsignal» $f_{Bild}$ ist das in der Bild-Speicher- und -Nachführschaltung 1 erzeugte periodische Signal, das dem zu erwartenden Eingangssignal entspricht. Diese Schaltung 1 muß dabei so ausgestaltet sein, daß das Bildsignal synchron zum Eingangssignal (d.h. für kurzzeitig periodisches Eingangssignal phasenstarr) erscheint. Dies kann beispielsweise durch eine Schaltungsanordnung gemäss Fig. 3 erreicht werden. Die erste Verknüpfungsschaltung 3 (Fig. 1) kann z.B. eine Subtrahierschaltung sein, welche die Differenz aus dem Bildsignal und dem Eingangssignal bildet, welche Differenz die Momentanabweichung des Eingangssignales vom zu erwartenden Verlauf darstellt. Die zweite Verknüpfungsschaltung 4 (Fig. 1) kann z.B. eine Addierschaltung sein, welche durch Summation von Mittelwert des Eingangssignales und der mit dem Koeffizienten b gewichteten Momentanabweichung den «beobachteten» Mittelwert bildet.

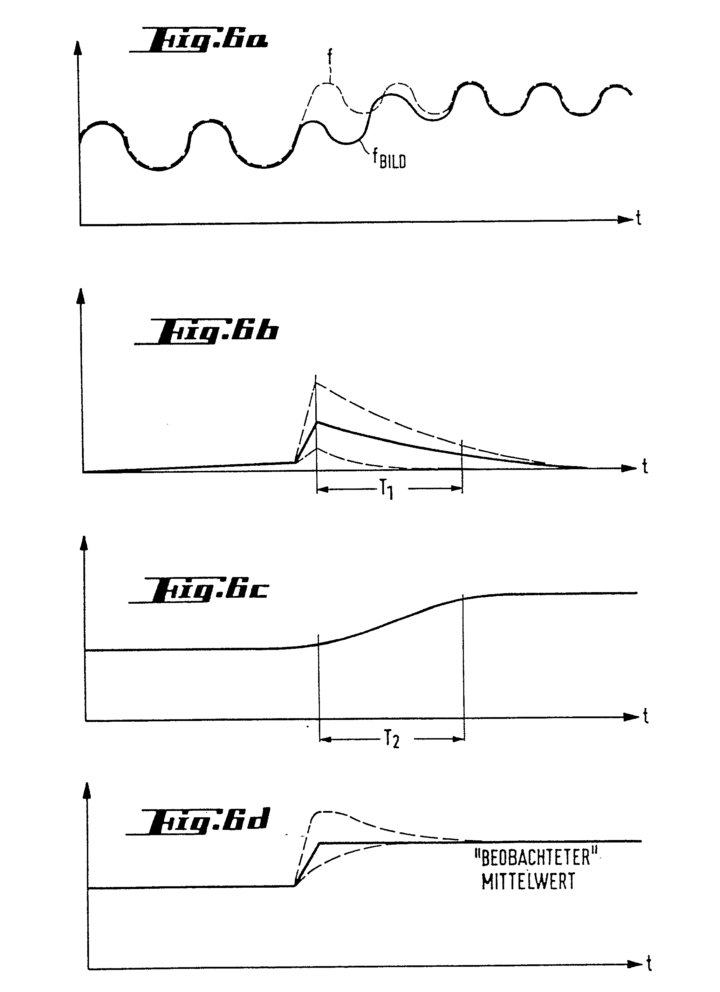

Man kann erkennen, daß z.B. für ein periodisches Eingangssignal das Signal $f_{Bild}$ gleich dem Eingangssignal ist, und daher für diesen Fall wegen der verschiedenen Momentanabweichung bei 4 ein herkömmlicher Mittelwert gebildet wird. Ändert sich jedoch das Eingangssignal, so stimmt das Eingangssignal nicht mehr mit dem Bildsignal überein, und die Abweichung wird ohne Zeitverzögerung an den Ausgang weitergegeben; erst wenn das Bildsignal dem geänderten Eingangssignal angepaßt ist, verschwindet diese Abweichung wieder. Wichtig für die Funktionsweise ist dabei, daß die Periodendauer des Bildsignales möglichst rasch über das Synchronsignal dem Eingangssignal nachgeführt wird. Durch Wahl des Koeffizienten b kann dabei festgelegt werden, wie stark die Momentanabweichung für die Bildung des «beobachteten» Mittelwertes berücksichtigt wird (siehe Fig. 6).

Die Fig. 3 zeigt eine beispielhafte Ausgestaltung einer Bild-Speicher- und Nachführschaltung 3.1 und eines Mittelwertbildners 3.2, entsprechend den Funktionsblöcken 1 und 2 in Fig. 1.

Die Bild-Speicher- und -Nachführschaltung 3.1 besteht aus einem Schieberegister 3.3 mit $N^*M$-Zellen, d.h., nach $N^*M$-Taktzyklen erscheint ein am Eingang der ersten Zelle anliegendes Signal $f'(t)$ am Ausgang der letzten Zelle ($N^*M$-te Zelle). Dabei gibt M die Anzahl der im Bildspeicher gespeicherten Perioden des Eingangssignales $f(t)$ an; N ist das Verhältnis aus der Periodendauer des Eingangssignales $f(t)$ und der Periodendauer T des Taktsignales, d.h. jede Periode des Eingangssignales wird in N Teilintervalle geteilt und der Wert in jedem dieser Teilintervalle wird jeweils in einer Zelle des Bildspeichers gespeichert. Das Eingangssignal $f^*(t)$ des Schieberegisters ist das Ausgangssignal einer Summierschaltung 3.6 und setzt sich aus der Summe, gebildet aus dem mit einer Konstanten a in einer Multiplizierschaltung 3.5 multiplizierten Eingangssignal $f(t)$ und dem mit dem Faktor (1-a) in einer Multiplizierschaltung 3.4 verknüpften Ausgangssignals $f^*(t-N^*M^*T)$ des Schieberegisters zusammen.

Die Bildfunktion des Eingangssignals wird dabei in der Art gebildet, daß durch die Schaltung die Periode des Eingangssignals in N gleiche Teilintervalle unterteilt wird. Für jedes dieser N Intervalle kann eine «Schaltung» entsprechend Fig. 3b wirksam sein, die einen gleitenden Mittelwert über mehrere Perioden des Eingangssignales im jeweiligen Teilintervall bildet. Die übrigen $N^*M$-1 Zellen des Schieberegisters dienen nur der Speicherung der Mittelwerte der gerade nicht benötigten N-1 restlichen Teilintervalle der Periodendauer des Eingangssignales und der $N^*(M-1)$ Teilintervalle der restlichen M-1 Perioden des Eingangssignales. Durch das Takten des Schieberegisters mit dem zum Eingangssignal synchronen Takt, der im Vergleich mit dem Eingangssignal die 1/N-te Periodendauer hat, wird erreicht, daß das dem jeweiligen Teilintervall entsprechende Signal $f^*(6-N^*M^*T)$ am Ausgang des Schieberegisters erscheint. Es wird daraus und aus dem Eingangssignal ein neuer Mittelwert entsprechend der Formel: $f^*(t) = f^*a + f^*(t-N^*M^*T), (1-a)$ gebildet.

Die Konstante a legt fest, wie stark das jeweils aktuelle Eingangssignal für die Bildung der Bildfunktion berücksichtigt wird, bzw. nach wievielen Taktperioden die Bildfunktion dem geänderten Eingangssignal nachgeführt ist. Z.B. werden für a = 1 nur die jeweils letzten Eingangswerte als Bildsignal gespeichert; für a = 0 hätte das aktuelle Eingangssignal überhaupt keinen Einfluß auf das Bildsignal. Ein typischer Wert für a ist etwa 0.2 wobei die aktuelle Eingangsgröße zu 20% berücksichtigt wird.

Weiters wird in der Fig. 3a eine beispielhafte Ausführungsform des Mittelwertbildners 3.2 für die Bildung der zweiten Ausgangsgröße des Bildfunktions- und Mittelwertbildners 1 der Fig. 1 dargestellt.

Der Mittelwertbildner besteht aus N Koeffizientengliedern 3.8 und einer Summierschaltung 3.9. Der Mittelwert wird dabei entsprechend der Formel:

$$MW = \sum_{n-1 \text{ bis } N^*M} k_n {}^*f^* (t-n^*T/N^*M; \quad \sum_{n-1 \text{ bis } N^*M} k_n = 1$$

d.h. aus der normierten Summe aus den $N^*M$ im Schieberegister gespeicherten Schützstellen der Bildfunktion gebildet; dies entspricht der Bildung des arithmetischen Mittelwertes der Bildfunktion (nichtrekursive Bildung). Durch Anordnung eines einzelnen Koeffizientengliedes nach der Summierschaltung kann, falls nicht Überlaufprobleme der Wertedarstellung auftreten, die Schaltung wesentlich vereinfacht werden. Von Nachteil ist dabei, daß die Ausgänge aller Zellen des Schieberegisters zugänglich sein müssen.

Die Fig. 3b zeigt dagegen eine rekursive Anordnung, bestehend aus einem Speicher 40, zwei Koeffizientengliedern 42, 43 und einer Summierschaltung 41. Diese Anordnung bildet analog zur Bild-Speicher und -Nachführschaltung 31 einen Mittelwert aus dem Eingangssignal. Dabei ist hier jedoch der Koeffizient k (wegen der Vielzahl der zu mittelnden Werte) entsprechend klein gewählt.

Die Fig. 3c zeigt die Verwendung eines Tiefpaßfilters zur Ermittlung des Mittelwertes falls das Signal $f(t)$ durch eine Spannung dargestellt ist; hier ergibt sich jedoch der Nachteil, daß die Grenzfrequenz des Filters der Periodendauer des Eingangssignales zumindest grob angepaßt werden sollte. Der Vorteil besteht in der besonders einfachen analogtechnischen Realisierung, wenn diese Anpassung entfallen kann.

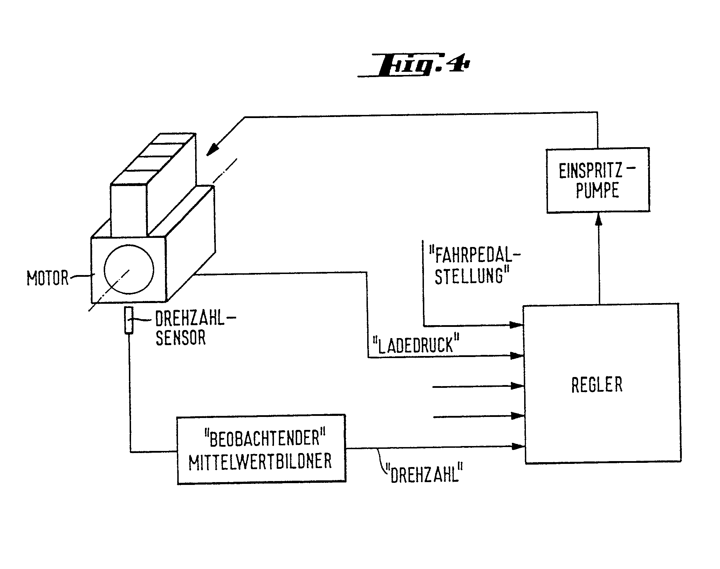

Die Fig. 4 zeigt eine Anwendung der Schaltung zum raschen Nachführen des Mittelwertes bei der Regelung eines Dieselmotors, dessen Einspritzpumpe über einen elektronischen Regler bedient wird.

Die Drehzahl des Motors wird dabei von einem Drehzahlsensor gemessen und dieses Signal dem «beobachtenden» Mittelwertbildner zugeführt; dessen Ausgangssignal stellt ein bereits vorverarbeitetes «Istdrehzahlsignal» als Eingangsgröße für den Regler dar. Der Regler steuert die Menge des eingespritzten Dieselkraftstoffes in Abhängigkeit von diesem Drehzahl-Istsignal, der Stellung des Fahrpedals und weiteren Eingangsgrößen des Reglers.

Durch die Verwendung des «beobachtenden» Mittelwertbildners zur Vorverarbeitung des Drehzahlsignales kann das Verhalten des Dieselmotors insbesondere bei niedrigen Drehzahlen, wo die Winkelgeschwindigkeit der Kurbelwelle besonders stark ungleichförmig ist, wesentlich verbessert werden.

Die Fig. 5 zeigt eine beispielhafte Realisierung eines Drehzahlsensors, wie er in der Schaltung nach Fig. 4 verwendet werden kann. Dabei ist es auf besonders einfache Weise möglich, sowohl das momentandrehzahlproportionale Signal als auch das Synchronsignal im Sensor selbst zu erzeugen.

Ein Zahnkranz 4.1 rotiert dabei synchron mit der Kurbelwelle des Motors. Eine Aufnahmespule 4.2 erzeugt beim Vorbeigleiten jedes Zahnes ein Signal, das in einem Verstärker 4.3 verstärkt und in einem Schmitt-Triggerverstärker 4.4 zu Rechteckimpulsen umgeformt wird. Dieses Taktsignal stellt direkt das Synchronsignal für den «adaptiven» Mittelwertbildner dar. Es wird außerdem in einem Frequenz-Spannungsumsetzer 4.5 in ein Analogsignal f als Eingangssignal für den «beobachtenden» Mittelwertbildner umgewandelt.

Fig. 6 zeigt beispielsweise die wichtigsten auftretenden Signale einer Schaltung zur Erzeugung eines «beobachtenden» Mittelwertes entsprechend der Fig. 1a bis 1c.

Das oberste Diagramm der Fig. 6a zeigt mit vollen Linien ein Eingangssignal, das z.B. als Momentandrehzahlsignal einer Verbrennungskraftmaschine entsprechend dem Signal f(t) in Fig. 5 anliegen kann. Der strichliert angedeutete Signalverlauf stellt das zum Eingangssignal synchrone Ausgangssignal der Bild-Speicher und -Nachführschaltung 1 dar. Man kann erkennen, daß das Bildsignal einer plötzlichen Änderung des Eingangssignales allmählich nachgeführt und angepaßt wird. Insbesondere ist festzuhalten, daß durch die Bild-Speicher- und Nachführschaltung 1 die Periodendauer des Bildsignales der Periodendauer des Eingangssignales augenblicklich nachgeführt wird. Dies wird z.B. bei einem Drehzahlsensor nach Fig. 5 durch die zwangsweise phasenstarre Erzeugung des Taktsignales bzw. durch die Synchronisierschaltung dadurch erreicht, daß das Eingangssignal und das der Bildspeicher- und Nachführschaltung zugeführte Taktsignal phasenstarr zueinander sind.

Fig. 6b zeigt das Ausgangssignal der ersten Verknüpfungsschaltung 3, das die Abweichung des Eingangssignales vom Bildsignal darstellt (ausgezogene Kurve). Strichliert ist angedeutet, wie dieses Differenzsignal durch die Multiplikation mit dem Koeffizienten b im Multiplizierglied 6 der Fig. 1 modifiziert wird.

Fig. 6c zeigt das Ausgangssignal des Mittelwertbildners 2, das z.B. den arithmetischen Mittelwert des Eingangssignales darstellen kann. Eine besonders vorteilhafte Funktionsweise ergibt sich, wenn ein «gleitender» Mittelwert gebildet wird.

Fig. 6d schließlich stellt das Ausgangssignal der zweiten Verknüpfungsschaltung 4 dar, das dem rasch nachgeführten «beobachteten» Mittelwert entspricht. Man erkennt die besonders rasche Reaktion des Ausgangssignales auf eine Änderung des fast periodischen Eingangssignales von dem der Mittelwert gebildet wird. Durch die Wahl des Koeffizienten b im Multiplizierglied 6 kann dabei (wie in Fig. 6d strichliert angedeutet ist) erreicht werden, daß entweder die Nachführung des «beobachteten» Mittelwertes nicht augenblicklich erfolgt, oder – wenn b ausreichend groß gewählt wird – sogar jede Änderung des Mittelwertes des Eingangssignals überschwingend am Ausgang der Schaltung erscheint, wodurch trotz der Mittelwertbildung eine Differenzierwirkung erreicht werden kann.

Eine besonders genaue Nachführung des Mittelwertes wird erreicht, wenn die Zeitkonstante der Mittelwertbildung (entsprechend der Zeitkonstante des Signals in Fig. 6c) gleich der Zeitkonstante der Nachführung des Bildsignales (entsprechend der Zeitkonstante des Signales in Fig. 6b) ist, da dann eine näherungsweise Kompensation der dynamischen Abweichung des nachgeführten Mittelwertes des Signales vom tatsächlich vorhandenen, jedoch nur theoretisch zu bestimmenden Mittelwert des fast periodischen Signales, auftritt, dies wird bei der Mittelwertbildung entsprechend Fig. 3a zwangsläufig erreicht.

**Patentansprüche**

1. Verfahren zum raschen Nachführen eines Mittelwertes, vorzugsweise des arithmetischen Mittelwertes, eines periodischen Signals, wie z.B. eines der momentanen Drehzahl einer Brennkraftmaschine, proportionalen Signals, bei auftretenden Änderungen desselben, dadurch gekennzeichnet, daß der während einer vorgegebenen Anzahl von Perioden auftretende Verlauf des fast periodischen Signals als Signalbild gespeichert wird, während einer darauffolgenden vorgegebenen Anzahl von Perioden dieses gespeicherte Signalbild entsprechend dem Verlauf des fast periodischen Signals während dieser vorgegebenen Anzahl von Perioden nachgeführt wird, und daß sodann fortlaufend während einer vorgegebenen Anzahl von Perioden jeweils das zuletzt nachgeführte gespeicherte Signalbild gemäß dem aktuellen Verlauf des fast periodischen Signals während der vorgegebenen Anzahl von Perioden nachgeführt wird, und daß gleichzeitig mit der Aktualisierung der aktuelle Verlauf des fast periodischen Signals phasenrichtig mit dem gespeicherten Signalbild unter Erzeugung eines Abweichsignals verglichen und dieses Abweichsignal mit einem Mittelwert des fast periodischen Signals, bzw. eines diesem entsprechenden Signals, verknüpft, insbesondere linear kombiniert wird.

2. Verfahren nach Anspruch 1, dadurch gekennzeichnet, daß der aktuelle Verlauf des fast periodischen Signals mit dem aktualisierten, insbesondere mit dem bereits aktualisierten, gespeicherten Signalbild verglichen wird.

3. Verfahren nach Anspruch 1 oder 2, dadurch gekennzeichnet, daß für den phasenrichtigen Vergleich der aktuelle Verlauf das fast periodische Signal und das gespeicherte Signalbild in einem von der Frequenz des fast periodischen Signals abgeleiteten Takt abgetastet werden.

4. Verfahren nach Anspruch 3 oder 4, dadurch gekennzeichnet, daß der Mittelwert des fast periodischen Signals als gewichtete Summe von Abtastwerten des zuletzt gespeicherten Signalbildes gebildet wird.

5. Schaltungsanordnung zur Durchführung des Verfahrens nach einem der Ansprüche 1 bis 4, gekennzeichnet durch eine Bild-Speicher und -Nachführschaltung (1), bei welcher an einem Eingang das fast periodische Signal und an einem Ausgang das mit dem Eingangssignal synchrone, gespeicherte Signalbild anliegt, sowie durch eine Schaltung (2) zur Bildung eines Mittelwertes des fast periodischen Signales, eine erste (3) und eine zweite (4) Signalverknüpfungsschaltung, wobei der Ausgang der Bild-Speicher-Nachführschaltung (1) an einen Eingang der ersten Verknüpfungsschaltung (3) geführt ist, bei welcher an einem weiteren Eingang das fast periodische Signal anliegt, und deren Ausgang gegebenenfalls über ein Koeffizientenglied (6) an einen Eingang der zweiten Verknüpfungsschaltung (4) geführt ist, bei welcher ein weiterer Eingang an den Ausgang des Mittelwertbildners (2) geführt ist.

6. Schaltungsanordnung nach Anspruch 5, dadurch gekennzeichnet, daß der Ausgang der Verknüpfungsschaltung (4) an eine Abtast- und Halteschaltung (7) geführt ist, an deren zweitem Eingang ein Taktsignal anliegt und an deren Ausgang der den Änderungen des fast periodischen Signals rasch nachgeführte Mittelwert des fast periodischen Signals anliegt.

7. Schaltungsanordnung nach Anspruch 5 und 6, dadurch gekennzeichnet, daß der Eingang des Mittelwertbildners (2) mit dem Eingang der Bild-Speicher und -Nachführschaltung (1) verbunden ist (Fig. 1a).

8. Schaltungsanordnung nach Anspruch 5 und 6, dadurch gekennzeichnet, daß der Eingang des Mittelwertbildners (2) mit einem Ausgang der Bild-Speicher-Nachführschaltung (1) verbunden ist (Fig. 1b, 1c).

9. Schaltungsanordnung nach Anspruch 5, 6, 7 oder 8, dadurch gekennzeichnet, daß eine Synchronisierschaltung (5) zur Erzeugung eines mit dem fast periodischen Signals synchronen Abtastsignales vorgesehen ist.

10. Schaltungsanordnung nach einem der Ansprüche 5 bis 9, dadurch gekennzeichnet, daß die Bild-Speicher und -Nachführschaltung (1) ein rückgekoppeltes Schieberegister aufweist, an dessen Signaleingang eine Verknüpfungsschaltung angeschlossen ist, welche zwei an eine Summierschaltung geführte Koeffizientenglieder aufweist, wobei am Eingang des einen Koeffizientengliedes das fast periodische Eingangssignal und am Eingang des anderen Koeffizientengliedes das Ausgangssignal des Schieberegisters anliegt, und an dessen Taktausgang ein gegebenenfalls von der Synchronisierschaltung herrührendes Taktsignal anliegt.

11. Schaltungsanordnung nach Anspruch 10, dadurch gekennzeichnet, daß die Schaltung (2) zur Bildung eines Mittelwertes eine Summierschaltung (39) aufweist, deren Eingänge gegebenenfalls jeweils über ein Koeffizientenglied an die Ausgänge der einzelnen Schieberegisterzellen geführt sind.

12. Schaltungsanordnung nach einem der Ansprüche 5 bis 10, dadurch gekennzeichnet, daß die Schaltung (2) zur Bildung eines Mittelwertes durch eine digitale oder analoge Tiefpaßfilterschaltung gebildet ist.

**Claims**

1. Method of fast follow-up insertion of a mean value, preferably of the arithmetic mean of a periodic signal, such as e.g., of a signal proportional to the momentary speed of an internal combustion engine, when modifications thereof occur, characterized in that the course of the quasi-periodic signal occurring during a predetermined number of periods is stored as a signal picture, during a subsequent given number of period this stored signal picture is inserted correspondingly to the course of the quasi-periodic signal during said given number of periods, and in that thus continuously during a given number of periods the last inserted stored signal picture is respectively inserted according to the actual course of the quasi-periodic signal during the given number of period, and in that simultaneously with the actualization, the actual course of the quasi-periodic signal is compared in proper phase relation with the stored signal picture in association with the production of a deviation signal, and said deviation signal is linked, particularly linearly combined with a mean value of the quasi-periodic signal or of a signal corresponding to it.

2. Method according to Claim 1, characterized in that the actual course of the quasi-periodic signal is compared with the actualized, particularly with the already actualized, stored signal picture.

3. Method according to Claim 1 or 2, characterized in that for the proper phase comparison the actual course of the quasi-periodic signal and the stored signal picture are scanned in a time derived from the frequency of the quasi-periodic signal.

4. Method according to Claim 3 or 4, characterized in that the mean value of the quasi-periodic signal is formed as weighted sum of scanning values of the last stored signal picture.

5. Circuitry for carrying out the method according to one of Claims 1 to 4, characterized by a picture storage and follow-up insertion circuit (1) in which the quasi-periodic signal is applied at one input and the signal picture stored, synchronous with the input signal, is applied at one output, as well as by a circuit (2) for the formation of a mean value of the quasi-periodic signal, a first (3) and a second (4) signal linkage circuits, the output of the picture storage and follow-up insertion circuit (1) being supplied to an input of the first linkage circuit at which the quasi-periodic signal applies at a further input, and the output of which may be taken via a coefficient element (6) to an input of the second linkage circuit (4) at which a further input is taken to the output of the mean value former (2).

6. Circuitry according to Claim 5, characterized in that the output of the linkage circuit (4) is taken to a scanning and holding circuit (7) to the second input of which a timing signal is applied, and at the output of which there is applied the mean value of the quasi-periodic signal quickly inserted as a follow-up to the variations of the quasi-periodic signal.

7. Circuitry according to Claims 5 and 6, characterized in that the input of the mean value former (2) is connected with the input of the picture storage and follow-up insertion circuit (1) (Fig. 1a).

8. Circuitry according to Claims 5 and 6, characterized in that the input of the mean value former (2) is connected with an output of the picture storage and follow-up insertion circuit (1). (Figs. 1b, 1c).

9. Circuitry according to Claim 5, 6, 7 or 8, characterized in that a synchronizing circuit is provided (5) for the production of a scanning signal synchronous with the quasi-periodical signal.

10. Circuitry according to one of Claims 5 to 9, characterized in that the picture storage and follow-up insertion circuit (1) has a feedback shift register to the signal input of which a linkage circuit is connected which has two coefficient elements taken to a summing circuit, the quasi-periodic input signal applying at the input of one coefficient element, and the output signal of the shift register applying at the input of the other coefficient element, and in timing signal possibly originating from the synchronization circuit being applied at the timing output of said shift register.

11. Circuitry according to Claim 10, characterized in that the circuit (2) for the formation of a mean value has a summation circuit (39) the inputs of which are possibly respectively passed via a coefficient element to the outputs of the individual shift register cells.

12. Circuitry according to one of Claims 5 to 10, characterized in that the circuit (2) for the formation of a mean value is formed by a digital or analogue low pass filter circuit.

## Revendications

1. Méthode d'adaptation rapide d'une valeur moyenne, plus spécialement la moyenne arithmétique d'un signal périodique, comme par exemple un signal proportionnel à la vitesse de rotation instantanée d'un moteur à combustion interne, lors de modifications de ce signal, caractérisée en ce que le tracé du signal quasi-périodique considéré pendant un nombre prédéfini de périodes est mis en mémoire comme image de signal, que pendant un nombre suivant prédéfini de périodes, on adapte cette image mémorisée du signal, correspondant au tracé du signal quasi-périodique pendant ce nombre prédéfini de périodes et en ce qu'ensuite, en continu, pendant un nombre prédéfini de périodes, chaque fois, l'image mémorisée dernièrement adaptée du signal est adaptée en conformité avec le tracé actuel du signal quasi-périodique pendant le nombre prédéterminé de périodes et en ce que, simultanément à l'actualisation, le tracé actuel du signal quasi-périodique est comparé, en phase correcte, à l'image mémorisée du signal, avec production d'un signal d'écart et que ce dernier est lié et combiné, linéairement notamment, à une valeur moyenne du signal quasi-périodique ou d'un signal correspondant à celui-ci.

2. Méthode selon la revendication 1, caractérisée en ce que le tracé actuel du signal quasi-périodique est comparé à l'image du signal mémorisée actualisée, notamment à celle déjà actualisée.

3. Méthode selon la revendication 1 ou 2, caractérisée en ce que dans la comparaison en phase correcte, le tracé actuel du signal quasi-périodique et l'image mémorisée du signal sont analysés dans un cycle issu de la fréquence du signal quasi-périodique.

4. Méthode selon la revendication 2 ou 3, caractérisée en ce que la valeur moyenne du signal quasi-périodique est établie comme la somme pondérée des valeurs d'analyse de la dernière image de signal mise en mémoire.

5. Agencement de montage pour la conduite de cette méthode selon l'une des revendications 1 à 4, caractérisé par un circuit mémoire d'images et suivi (1), dans lequel à une entrée est appliqué le signal quasi-périodique et à une sortie l'image mémorisée du signal, synchrone au signal d'entrée, ainsi que par un circuit (2) d'établissement d'une valeur moyenne du signal quasi-périodique, par un premier (3) et un deuxième (4) circuit combinatoire de signaux, la sortie du circuit mémoire d'images et suivi (1) étant amenée à l'entrée du premier circuit combinatoire (3), dans lequel est appliqué à une autre entrée le signal quasi-périodique et dont la sortie est amenée, le cas échéant par l'intermédiaire d'un circuit de coefficients (6), à l'entrée du deuxième circuit combinatoire (4), dans lequel une autre entrée est reliée à la sortie du générateur de valeur moyenne (2).

6. Agencement de montage selon la revendication 5, caractérisé en ce que la sortie du circuit combinatoire (4) est amenée à un circuit d'analyse et de retenue (7), à une deuxième entrée duquel est appliqué un signal de rythme et à la sortie duquel on retrouve la valeur moyenne du signal quasi-périodique rapidement adaptée aux modifications de ce dernier.

7. Agencement de montage selon les revendications 5 et 6, caractérisé en ce que l'entrée du générateur de valeur moyenne (2) est reliée à l'entrée du circuit mémoire d'images et suivi (1) (figure 1a).

8. Agencement de montage selon les revendications 5 et 6, caractérisé en ce que l'entrée du générateur de valeur moyenne (2) est reliée à une sortie du circuit mémoire d'images et suivi (1) (figures 1b, 1c).

9. Agencement de montage selon les revendications 5, 6, 7 ou 8, caractérisé en ce qu'un circuit de synchronisation (5) est prévu pour créer un signal de réglage synchrone au signal quasi-périodique.

10. Agencement de montage selon l'une des revendications 5 à 9, caractérisé en ce que le circuit mémoire d'images et suivi (1) présente un registre à décalage à réaction, à l'entrée de signal duquel est raccordé un circuit combinatoire, qui présente deux circuits de coefficients amenés à un additionneur, tandis que sont appliqués à l'entrée de l'un des circuits de coefficients le signal d'entrée quasi-périodique, à l'entrée de l'autre circuit de coefficients le signal de sortie du registre à décalage et à la sortie de rythme de ce dernier un signal de rythme provenant éventuellement du circuit de synchronisation.

11. Agencement de montage selon la revendication 10, caractérisé en ce que le circuit (2) d'établissement d'une valeur moyenne présente un additionneur (3.9), dont les entrées sont amenées respectivement, par l'intermédiaire d'un circuit de coefficients éventuellement, aux sorties des cellules individuelles du registre à décalage.

12. Agencement de montage selon l'une des revendications 5 à 10, caractérisé en ce que le circuit (2) d'établissement d'une valeur moyenne est constitué par un circuit numérique ou analogique de filtre passe-bas.

**Fig.1a**

**Fig.1b**

**Fig.1c**

Fig.2

4,(5)

f

| PHASEN-VERGLEICHER | TIEFPASS-FILTER | VCO VOLTAGE CONTR. OSCILLATOR |

(N*f)

TEILER DURCH N

EP 0 133 426 B1

Fig.3a

Fig.3b

Fig.3c

## Fig.4

MOTOR

DREHZAHL-
SENSOR

EINSPRITZ-
PUMPE

"FAHRPEDAL-
STELLUNG"

"LADEDRUCK"

REGLER

"BEOBACHTENDER"
MITTELWERTBILDNER

"DREHZAHL"

Fig.5

EP 0 133 426 B1

**Fig.6a**

f

f BILD

t

**Fig.6b**

T₁

t

**Fig.6c**

T₂

t

**Fig.6d**

"BEOBACHTETER"
MITTELWERT

t